# EUROPÄISCHE PATENTSCHRIFT

(11) **EP 0 594 012 B1**
(45) Veröffentlichungstag und Bekanntmachung des Hinweises auf die Patenterteilung: **02.04.1997**
(21) Anmeldenummer: 93116379.4
(22) Anmeldetag: 08.10.1993
(51) Int. Cl.: G01J 1/44

(54) **Verfahren zum Detektieren von Strahlung und Strahlungssensor**
Method for the detection of radiation and radiation sensor
Méthode de détection de radiation et détecteur de radiation

(30) Priorität: 20.10.1992 DE 4235343
(43) Veröffentlichungstag der Anmeldung: 27.04.1994
(73) Patentinhaber: SIEMENS AKTIENGESELLSCHAFT, 80333 München (DE)
(72) Erfinder: Zirkl, Siegmar, Dipl.-Ing., D-93051 Regensburg (DE)

(56) Entgegenhaltungen:
- DE-A- 3 225 211
- US-A- 3 793 522

## Beschreibung

Die Erfindung bezieht sich auf ein Verfahren zum Detektieren von Strahlung, insbesondere von Licht, wobei elektronische Bauelemente hinsichtlich ihrer Veränderung durch Temperaturgang und Alterung kompensiert sind.

Strahlungssensoren, die reflektierte Strahlung aufnehmen sollen, erhalten in der Praxis weniger Strahlung als auf den reflektierenden Körper auftrifft. Für derartige und ähnliche Anwendungen ist es in der Praxis schwierig, die detektierte Srahlung zu der in Beziehung zu setzen, die auf den reflektierenden Körper auftrifft. In der Gebäudesystemtechnik möchte man einerseits eine arbeitsplatzgerechte Beleuchtung sicherstellen und benötigt hierfür geeignete Sensoren, die in der Praxis im Deckenbereich in der Nähe der Leuchten unterzubringen sind. Das auf die Arbeitsfläche oder den Arbeitsbereich eines Gebäudes treffende Licht wird jedoch in Abhängigkeit vom Zustand der Arbeitsfläche und auch in Abhängigkeit von darauf angeordneten Körpern und Dingen sehr unterschiedlich und mit unterschiedlicher Intensität zum Sensor reflektiert.

Der Erfindung liegt die Aufgabe zugrunde, ein Verfahren zum Detektieren von Strahlung und einen Strahlungssensor zu entwickeln, wobei es leicht möglich ist, das Detektieren an die Verhältnisse im Einzelfall anzupassen und hinsichtlich der strahlungsermittelnden Bauteile Veränderungen ihrer Eigenschaften zuverlässig und einfach zu kompensieren.

Zwei Temperaturkompensationssysteme sind aus DE-A-3 225 211 und US-A-3 793 522 bekannt.

Die Lösung der geschilderten Aufgabe erfolgt durch ein Verfahren nach Patentanspruch 1 und durch einen Strahlungssensor nach Patentanspruch 2.

Beim erfindungsgemäßen Verfahren kompensiert die Verstärkung die Verluste, die durch die Reflektion der Strahlung von einer reflektierenden Fläche auftreten. So hängen die Verluste stark von den räumlichen Gegebenheiten, beispielsweise dem Bodenbelag, der Einrichtung, der Farbe und dem Glanz ab. Die Regelung der Verstärkung kann günstigste und schlechteste zu erwartende Verlustfaktoren ausgleichen. Es ist besonders günstig, ein linear arbeitendes Detektorelement zu wählen und die logischen Operationen digital durchzuführen. Es ist daher auch günstig, den Prozessoreingängen für die Sensorfunktionen A/D-Wandler vorzuschalten.

In einem Speicher werden Wertepaare entsprechend dem Eingangssignal und dem Ausgangssignal eines Verstärkers über den Meßbereich der Sensoreinrichtung mittels einer Eichung abgelegt. Es kann auch eine Beziehung zwischen den beiden Signalwerten jeweils über den Meßbereich abgespeichert werden. Nach der Eichung, die im Einsatz durchgeführt werden kann, liefert das Ausgangssignal, das vom Verstärker abgegeben wird, während der Meßzeiten ein Maß für die empfangene Strahlung. Dieses Ausgangssignal steht zur weiteren Verwertung zur Verfügung.

Um Veränderungen der Eigenschaften der Elemente der gesamten Sensoreinrichtung zu kompensieren, wird zu bestimmten Zeiten in Folge das Ausgangssignal und das Eingangssignal als Wertepaar - bzw. in seiner Beziehung - mit dem abgelegten Wertepaar bzw. mit einer abgespeicherten Beziehung zum jeweiligen Eingangssignal der übereinstimmenden Größe verglichen. Bei einer Abweichung im Ausgangssignal wird dieses durch entsprechendes Beaufschlagen des Verstärkers auf dem zum Eingangssignal abgelegten Wert des zugeordneten Ausgangssignals abgeglichen.

Nach dem geschilderten Prinzip arbeitet ein Strahlungssensor nach Patentanspruch 2. Dieser kann im einzelnen als Strahlungssensor nach Patentanspruch 3 oder 4 nach unterschiedlichen Prinzipien realisiert werden.

Wenn der Strahlungssensor bei einem Gebäudeinstallationssystem eingesetzt werden soll, bei dem Teilnehmerstationen mit einem Bus über Busankoppler in Verbindung stehen, ist es vorteilhaft, das Eingangssignal und das Ausgangssignal des Verstärkers dem Prozessor des Busankopplers zuzuführen und von dessen Stellausgang den Verstärker zu beaufschlagen und zu verstellen, bis das Ausgangssignal den abgelegten Wert erzielt. Speicher und Logikteil des Prozessors eines Busankopplers können für einen Strahlungssensor nach Patentanspruch 3 oder für einen solchen nach Patentanspruch 4 herangezogen werden. Anspruch 5 schildert ein einschlägiges Ausführungsbeispiel für einen Strahlungssensor nach Patentanspruch 3, und Anspruch 6 gibt ein einschlägiges Ausführungsbeispiel für einen Strahlungsensor nach Anspruch 4 wieder.

Die Erfindung soll nun anhand von in der Zeichnung grob schematisch wiedergegebenen Ausführungsbeispielen näher erläutert werden:
- In FIG 1: ist ein Ausführungsbeispiel nach dem ersten Prinzip und
- in FIG 2: ein Ausführungsbeispiel nach einem zweiten Prinzip veranschaulicht.

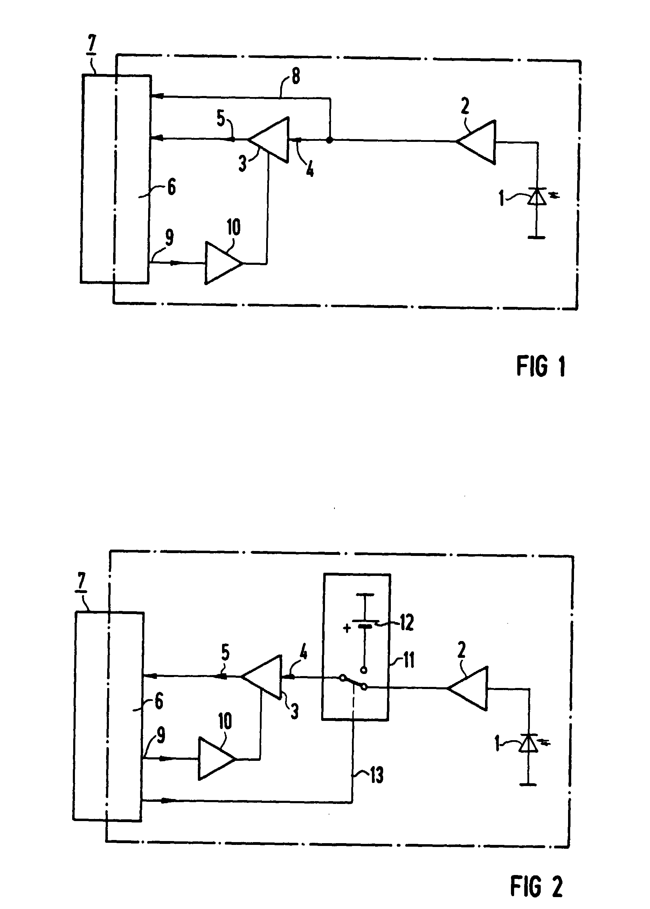

Der Strahlungssensor nach Fig. 1 arbeitet mit einem Detektor 1, beispielsweise für Licht. Ein lichtempfindliches Halbleiterelement wandelt die Strahlung in elektrische Signale um, die in einem verstärkenden Signalaufbereiter 2 aufbereitet werden. Die abgegebenen Signale werden einem Verstärker 3 als Eingangssignale 4 zugeführt. Die verstärkten Ausgangssignale 5 werden einem Prozessor 6 mit Speicher und Logikteil zugeleitet. Der Prozessor 6 kann Teil einer Busankopplung sein. Dem Prozessor 6 werden auch die Eingangssignale 4 über eine Leitung 8 direkt zugeleitet. Vom Stellausgang 9 des Prozessors werden gegebenenfalls über einen verstärkenden Signalaufbereiter 10 die Stellsignale dem Verstärker 3 zugeführt.

In einem Speicher des Prozessors 6 werden Wertepaare entsprechend dem Eingangssignal 4 und dem Ausgangssignal 5, oder Beziehungen zwischen beiden Signalwerten, über den ganzen Meßbereich abgelegt. Dies kann durch eine Eichung erfolgen. Der Detektor bzw. das eigentliche Sensorelement wird vorteilhafterweise danach ausgewählt, daß es eine lineare Arbeitskennlinie aufweist. Ein geeignetes lichtempfindliches Element ist ein entsprechendes Photoelement bzw. eine Photodiode im Generatorbetrieb. Es eignen sich insbesondere amorphe Silizium-Detektoren. Bei einer linearen beitsweise entfällt, per Hand oder durch Software, eine Linearisierung erzielen zu müssen.

Die Eichung des Strahlungssensors kann auf eine der bekannten Weisen erfolgen. Wenn man den Lichtpegelbereich auf einer gegebenen Arbeitsfläche von 0 bis 1500 Lux (lx) nach DIN 5035 annimmt, kann ein digitaler Meßbereich entsprechend zugeordnet werden. Bei 8 Bit ergeben sich 2⁸, also 256 Einheiten. Die Eingänge des Prozessors 6 für die Leitung 8 und für die Ausgangssignale 5 und der Ausgang für das Stellsignal 9 können zweckmäßigerweise einen A/D-Wandler aufweisen bzw. einen D/A-Wandler für das Stellsignal. üblicherweise wird ein A/D-Wandler zum Umsetzen analoger in digitale Signale am oberen Ende seines Digitalbereiches abgeglichen. In der Praxis wird hierzu die Verstärkung eines vorgeschalteten Analogverstärkers entsprechend eingestellt, so daß an seinem Eingang der höchste Wert des Spannungsbereiches anliegt. Man kann auch die Referenzspannung für den A/D-Wandler entsprechend variieren. Durch derartige oder andere bekannte Eichmaßnahmen werden dem ganzen zu empfangenden Strahlungsbereich entsprechende Signalwerte zugeordnet.

Nach einer weiteren Eichmöglichkeit kann man auf einen definierten Zwischenwert abgleichen: Bei einem lichtempfindlichen Strahlungssensor kann mit einem Luxmeter der Lichtpegel auf der Arbeitsfläche gemessen werden. Es sei weiter angenommen, daß der Prozessor den Quotienten aus Ausgangssignal zu Eingangssignal bilde, so daß jeweils der Verstärkungsfaktor ermittelt und im Speicher zu einem zugehörigen Eingangssignal abgespeichert wird. Der so gebildete Verstärkungsfaktor kann zum Eichen vorerst klein gewählt werden, so daß wegen der Wirkung der Verluste auf der reflektierenden Arbeitsfläche auf dem Weg der Lichtstrahlung zu einem an der Decke angeordneten Detektor in einem Raum, auf einer digitalen Skala zunächst ein niedriger Wert angezeigt wird. Die Verstärkung des Verstärkers 3 kann dann über entsprechende Stellsignale erhöht werden, bis der digitale Wert dem vom Luxmeter angezeigtem Wert entspricht.

Vorteilhafterweise wird die Verstärkung des Verstärkers 3 so eingestellt, daß bei einem dem A/D-Wandler vorgeschalteten Analogverstärker die geeignete Verstärkung eingestellt wird. Bei einer derartigen Eichung bleibt die Auflösung über den Meßbereich gleich. Ein derart lineares Verhalten hat wesentliche Vorteile:
- Es ist dann in der Praxis leicht möglich, Hysteresen für Stell- und Regelvorgänge zu setzen.
- Den Lichtwerten linear zugeordnete Signale können als absolute Lichtwerte verstanden werden, die in einem System, beispielsweise einem Gebäudeinstallationssystem es erleichtern, verschiedene Komponenten und Untersysteme miteinander zu verbinden. Derartige absolute Lichtwerte stimmen mit jenen auf der Arbeitsfläche vorhandenen meßbaren Lichtwerten in eindeutiger Zuordnung überein.

Bei linearen Verhältnissen kann man davon ausgehen, daß im Beispiel von 1500 lx bei Eichen auf einen mittleren Wert der digitale Skalenendwert einem Pegel von 1500 lx entspricht, also gleichfalls geeicht ist. Bedingung hierfür ist lediglich eine zeitkonstante Referenzspannung am A/D-Wandler, was in der Praxis leicht zu gewährleisten ist.

Andererseits scheidet eine Eichung bzw. Verstärkungseinstellung mittels eines Potentiometers aus, da die dämpfenden optischen Einflüsse einer das Potentiometer bedienenden Person den Eichvorgang stören würden.

Beim geeichten Strahlungsensor dient das Ausgangssignal 5 während der Meßzeiten als Maß für die empfangene Strahlung und steht für weitere Verwertung zur Verfügung.

Wesentlich ist, daß nach dem erfindungsgemäßen Verfahren und dem entsprechenden Strahlungssensor Veränderungen der physikalischen Eigenschaften der elektronischen Bauelemente kompensiert werden:

Hierzu wird zu bestimmten Zeiten in Folge das Ausgangssignal und das Eingangssignal als Wertepaar - bzw. in seiner Beziehung - mit dem abgelegten Wertepaar zum jeweiligen Eingangssignal 4 der übereinstimmenden Größe verglichen. Dieser Vergleich wird also von Zeit zu Zeit durchgeführt. Wenn hierbei eine Abweichung im Ausgangssignal 5 festzustellen ist, wird dieses durch entsprechendes Beaufschlagen des Verstärkers 3 auf den zum Eingangssignal 4 für das zugeordnete Ausgangssignal abgelegten Wert angeglichen. Vom Stellausgang 9 wird dem Verstärker 3 dann ein entsprechend größeres Signal zugeführt, um die ursprüngliche Verstärkung, bezogen auf ein bestimmtes Eingangssignal 4, wieder herzustellen.

Eine besonders vorteilhafte Methode, Veränderungen in den Eigenschaften der elektronischen Bauelemente zu kompensieren ist in Fig. 2 veranschaulicht. Der Detektor 1 arbeitet wieder über einen verstärkenden Signalaufbereiter 2 auf einen Verstärker 3. Das Eingangssignal 4 wird jedoch nicht selbst im Speicher des Prozessors 6 abgelegt, sondern nur das jeweils zugeordnete Ausgangssignal 5. Zu bestimmten Zeiten in Folge wird ein Vergleich des zu einem definiertem Eingangssignal gebildeten Ausgangssignals 5 mit dem im Speicher abgelegten zugeordneten Ausgangssignal durchgeführt. Das definierte Eingangssignal für die Durchführung des Vergleichs zum Kompensieren von ändernden Einflüssen wird von einem Signalgenerator 11 erzeugt. Im einfachsten Fall ist das eine Spannungsquelle 12, die mittels einer Art Weiche das Eingangssignal 4 auf den Verstärker 3 geben kann. Im normalen Meßbetrieb ist dagegen eine Durchverbindung vom verstärkenden Signalaufbereiter 2 zum Verstärker 3 hergestellt. Das von Zeit zu Zeit zurückzuführende definierte Eingangssignal kann über eine Steuerleitung 13 vom Prozessor gesteuert angelegt werden. Diese Steuerleitung 13 kann auch zum Eichem des Strahlungssensors genutzt werden.

In der Ausführung nach Fig. 2 wird nicht das Eingangssignal 4, sondern jeweils ein zugeordnetetes Ausgangssignal 5 gespeichert. Wenn in einer Kompensationsroutine vor einer Messung oder von Zeit zu Zeit das definierte Eingangssignal an den Verstärker 3 angelegt wird und eine Abweichung des zugeordneten Ausgangssignals vom abgespeicherten zugeodneten Ausgangssignal festgestellt wird, kann vom Stellausgang 9 der Verstärker 3 in seiner Verstärkung entsprechend verstellt werden, bis die Ausgangssignale übereinstimmen. Da beim Verfahren nach Fig. 2 die Ausgangssignale 5 nicht nur ein Maß für die Helligkeit sind, sondern auch im Logikteil des Prozessors 6 die Grundlage zur Ermittlung einer Abweichung aufgrund veränderter Eigenschaften der Elektronikelemente bilden, hat man den Vorteil, daß man auch bei großen Verstärkungsfaktoren nicht zu Ungenauigkeiten kommt. Derartige Ungenauigkeiten können bei einem Verfahren nach Fig. 1 auftreten, wenn bei einer begrenzten Anzahl von Bits, beispielsweise 8 Bit, bei großen Verstärkungsfaktoren von einem zu einem anderen großen Verstärkungsfaktor große Sprünge in den Quotienten Ausgangssignal zu Eingangssignal auftreten, die bei einer begrenzten Auflösung über den Meßbereich zu Ungenauigkeiten führen. Es entfällt auch das Problem, daß in unteren Grenzwerten in der Nähe von Dunkelheit die Verstärkung nur schwer errechnet werden kann. Das Verfahren nach Fig. 2 kommt darüberhinaus mit lediglich einem A/D-Wandler aus, wenn man Analogsignale in Digitale Signale zur logischen Verarbeitung umwandeln möchte.

## Patentansprüche

1. Verfahren zum Detektieren von Strahlung, insbesondere von Licht, wobei elektronische Bauelemente hinsichtlich ihrer Veränderung, beispielsweise durch Temperaturgang und Alterung, kompensiert sind, indem
- in einem Speicher Wertepaare entsprechend dem Eingangssignal (4) und dem Ausgangssignal (5) eines Verstärkers (3), bzw. Beziehungen zwischen beiden Signalwerten, über den Meßbereich, beispielsweise mittels einer Eichung, abgelegt werden;
- das Ausgangssignal (5) während Meßzeiten als Maß für die empfangene Strahlung zur weiteren Verwertung zur Verfügung gestellt wird;
- und zu bestimmten Zeiten in Folge das Ausgangssignal (5) und das Eingangssignal (4) als Wertepaar - bzw. in seiner Beziehung - mit dem abgelegten Wertepaar zum jeweiligen Eingangssignal (4) der übereinstimmenden Größe verglichen wird, wobei bei einer Abweichung im Ausgangssignal (5) dieses durch entsprechendes Beaufschlagen des Verstärkers (3) auf den zum Eingangssignal (4) für das zugeordnete Ausgangssignal abgelegten Wert angeglichen wird.

2. Strahlungssensor, insbesondere für Licht, der hinsichtlich einer Veränderung seiner elektronischen Bauelemente, beispielsweise durch Temperaturgang und Alterung, kompensiert ist, indem ein Detektor (1) für Strahlung mit Umwandlung in ein elektrisches Eingangssignal mit zumindest einem Verstärker (3) verbunden ist,
- wobei Eingangssignal (4) und Ausgangssignal (5) des Verstärkers (3) einem Speicher (in 6) zur paarweisen Ablage bzw. einem Logikteil (in 6) eines Prozessors (6) zur Bildung einer Beziehung zugeführt sind, die im Speicher abgelegt wird;
- und wobei das Ausgangssignal (5) während Meßzeiten als Maß für die empfangene Strahlung einer Schnittstelle zugeführt ist,
- und wobei gesteuert von einem Zeitgeber ein Vergleicher für einen Vergleich von Ausgangssignal (5) und Eingangssignal (4) mit den abgelegten Werten beaufschlagt wird, wobei entweder Wertepaare oder Beziehungen verglichen werden, und wobei der Vergleicher einen Stellausgang (9) beaufschlagt, der mit dem Stelleingang des Verstärkers (3) verbunden ist.

3. Strahlungssensor nach Anspruch 2, **dadurch gekennzeichnet,** daß das Eingangssignal (4) und das Ausgangssignal (5) einem Logikteil zugeführt werden, das den Quotienten von Ausgangs- zu Eingangssignal als Verstärkungsfaktor ermittelt, der einem Speicher zugeführt wird, in dem jeweils zu einem Eingangssignal (4) der zugeordnete Verstärkungsfaktor abgelegt ist und daß zu bestimmten Zeiten in Folge ein Vergleich des Verstärkungsfaktors zu einem bestimmten Eingangssignal (4) mit dem abgespeicherten stärkungsfaktor durchgeführt wird und daß bei Abweichung durch entsprechendes Beaufschlagen des Verstärkers (3) das Ausgangssignal (5) auf den zugeordneten abgelegten Wert angeglichen wird.

4. Strahlungssensor nach Anspruch 2, **dadurch gekennzeichnet,** daß zu den Eingangssignalen (4) jeweils zugeordnete Ausgangssignale (5) im Speicher abgelegt werden, und daß zu bestimmten Zeiten in Folge ein Vergleich des zu einem definierten Eingangssignal gebildeten Ausgangssignals mit dem im Speicher abgelegten zugeordneten Ausgangssignal durchgeführt wird und daß bei Abweichung durch entsprechendes Beaufschlagen des Verstärkers (3) das Ausgangssignal (5) auf den abgelegten Wert angeglichen wird.

5. Strahlungssensor nach Anspruch 3, **dadurch gekennzeichnet,** daß bei einem Gebäudeinstallationssystem, bei dem Teilnehmerstationen mit einem Bus über Busankoppler (7) in Verbindung stehen, jeweils umfasssend einen Prozessor (6) mit Speicher und mit Logikteil, das Eingangssignal (4) und das Ausgangssignal (5) des Verstärkers (3) dem Prozessor (6) des Busankopplers (7) zugeführt werden und daß dieser den Verstärker (3) beaufschlagt.

6. Strahlungssensor nach Anspruch 4, **dadurch gekennzeichnet,** daß bei einem Gebäudeinstallationssystem, bei dem Teilnehmerstationen mit einem Bus über Busankoppler (7) in Verbindung stehen, jeweils umfassend einen Prozessor (6) mit Speicher und mit Logikteil, das Ausgangssignal (5) des Verstärkers (3) dem Prozessor (6) des jeweiligen Busankopplers (7) zugeführt wird, und daß dieser den Verstärker (3) beaufschlagt sowie einen Signalgenerator (11) zum Abgeben eines definierten Eingangssignals.

7. Strahlungssensor nach Anspruch 5 oder 6, **dadurch gekennzeichnet,** daß als Detektor (1) ein analog arbeitendes Element mit linearen Eigenschaften eingesetzt ist und den Prozessoreingängen für den Sensor A/D-Wandler und Analogverstärker vorgeschaltet sind.

## Claims

1. Process for detecting radiation, in particular light, in which changes in electronic components due to temperature sensitivity and ageing, for example, are compensated by
- storing in a memory pairs of values corresponding to the input signal (4) and the output signal (5) of an amplifier (3), or relationships between both signal values, over the measurement range, for example by means of a calibration;
- making the output signal (5) available for further use during measurement intervals as an indication of the received radiation;
- and by comparing at specific, successive time intervals the output signal (5) and the input signal (4), as a pair of values - or its relationship - to the stored pair of values of the respective input signal (4) of the corresponding variable, whereby in the event of a deviation in the output signal (5) the output signal is adjusted to the value assigned to the input signal (4) for the associated output signal by controlling the amplifier (3) accordingly.

2. Radiation sensor, in particular for light, that is compensated for changes in its electronic components due to temperature sensitivity and ageing, for example, by connecting a detector (1) for radiation, with conversion into an electrical input signal, to at least one amplifier (3),
- in which input signal (4) and output signal (5) of the amplifier (3) are fed to a memory (in 6) for storing in pairs, or to a logic section (in 6) of a processor (6) for generating a relationship, which is stored in the memory;
- and in which the output signal (5) is fed to an interface during measurement intervals as an indication of the received radiation,
- and in which, under the control of a timer, the stored values are applied to a comparator for a comparison between the output signal (5) and the input signal (4), either pairs of values or relationships being compared, and a control output (9) that is connected to the control input of the amplifier (3), being applied to the comparator.

3. Radiation sensor according to Claim 2, **characterised in that** the input signal (4) and the output signal (5) are fed to a logic section which determines the quotient of the output signal and the input signal as an amplification factor, which is fed to a memory in which the amplification factor assigned to an input signal (4) is stored, and that at successive time intervals a comparison is made between the amplification factor of a specific input signal (4) and the stored amplification factor, and that in the event of deviation, the output signal (5) is adjusted to the associated, stored value by controlling the amplifier (3) accordingly.

4. Radiation sensor according to Claim 2, **characterised in that** output signals (5) assigned to the input signals (4) are stored in the memory, and that at successive time intervals a comparison is made between the output signal generated at a defined input signal and the associated output signal stored in the memory, and that in the event of deviation, the output signal (5) is adjusted to the stored value by controlling the amplifier (3) accordingly.

5. Radiation sensor according to Claim 3, **characterised in that** in a buildings wiring system in which subscriber stations are connected to a bus via a bus interface (7), and in which a processor (6) with memory and logic section are included, the input signal (4) and the output signal (5) of the amplifier are fed to the processor (6) of the bus interface (7), and that the bus interface controls the amplifier (3).

6. Radiation sensor according to Claim 4, **characterised in that** in a buildings wiring system in which subscriber stations are connected to a bus via a bus interface (7), and in which a processor (6) with memory and logic section are included, the output signal (5) of the amplifier (3) is fed to the processor (6) of the respective bus interface (7), and that the bus interface controls the amplifier (3), and a signal generator (11) for delivering a defined input signal is also included.

7. Radiation sensor according to Claim 5 or 6, **characterised in that** an analogue element with linear characteristics is used as the detector (1), and A/D converters and analogue amplifiers are connected upstream of the processor inputs for the sensor.

## Revendications

1. Procédé de détection de rayonnement, notamment de lumière, la variation due à l'historique de température et au vieillissement de composants électroniques étant compensée dans lequel,
- on met en mémoire, par exemple au moyen d'un étalonnage, dans un dispositif de mémoire, des couples de valeurs correspondant au signal (4) d'entrée et au signal (5) de sortie d'un amplificateur (3), ou des relations entre les deux valeurs de signal, couvrant le domaine de mesure;
- on met à disposition pendant des durées de mesure le signal (5) de sortie comme mesure du rayonnement reçu, en vue d'une autre exploitation; et
- on compare à des instants déterminés, successivement, le signal (5) de sortie et le signal (4) d'entrée en tant que couple de valeurs - ou en sa relation - au couple de valeurs mis en mémoire ou à une relation mise en mémoire en regard du signal (4) d'entrée associé de la grandeur coïncidante. le signal de sortie étant, en cas d'écart, ajusté en alimentant l'amplificateur (3) en conséquence pour obtenir la valeur du signal de sortie associé mis en mémoire en regard du signal (4) d'entrée.

2. Capteur de rayonnement, notamment de lumière, qui compense une variation, par exemple due à l'historique de température et au vieillissement, de ses composants électroniques, dans lequel un capteur (1) de rayonnement soumis à une conversion en un signal d'entrée électrique est relié à au moins un amplificateur (3),
- le signal (4) d'entrée et le signal (5) de sortie de l'amplificateur (3) étant envoyés à une mémoire (incluse dans 6) servant à la mise en mémoire par couple et à une partie logique (incluse dans 6) d'un processeur (6) servant à former une relation qui est mise en mémoire dans la mémoire;
- et le signal (5) de sortie obtenu pendant les durées de mesure étant envoyé à une interface comme mesure du rayonnement reçu,
- et, de manière commandée par un indicateur de temps, un comparateur étant alimenté en les valeurs mises en mémoire pour une comparaison du signal (5) de sortie et du signal (4) d'entrée, soient des couples de valeurs soient des relations étant comparées, et le comparateur alimentant une sortie (9) de réglage qui est reliée à l'entrée de réglage de l'amplificateur (3).

3. Capteur de rayonnement suivant la revendication 2, caractérisé en ce que le signal (4) d'entrée et le signal (5) de sortie sont envoyés à une partie logique qui détermine le quotient du signal d'entrée sur le signal de sortie comme facteur d'amplification, lequel est envoyé à une mémoire dans laquelle le facteur d'amplification associé est mis en mémoire en regard d'un signal (4) d'entrée, et en ce que, à des instants déterminés il est effectué successivement une comparaison du facteur d'amplification correspondant à un signal (4) d'entrée déterminé avec le facteur d'amplification mis en mémoire, et en ce que, en cas d'écart, le signal (5) de sortie est ajusté à la valeur associée mise en mémoire en alimentant en conséquence l'amplificateur (3).

4. Capteur de rayonnement suivant la revendication 2, caractérisé en ce qu'il est mis en mémoire dans la mémoire en regard des signaux (4) d'entrée les signaux (5) de sortie associés, et en ce que, à des instants déterminés il est effectué successivement une comparaison du signal de sortie formé en regard d'un signal d'entrée déterminé au signal de sortie associé mis en mémoire dans la mémoire, et en ce que, en cas d'écart, le signal (5) de sortie est ajusté à la valeur associée mise en mémoire en alimentant en conséquence l'amplificateur (3).

5. Capteur de rayonnement suivant la revendication 3, caractérisé en ce que, dans un système d'installation électrique de bâtiments, dans lequel des postes d'abonné sont en liaison avec un bus par l'intermédiaire de coupleurs (7) de bus, comportant chacun un processeur (6) ayant un dispositif de mémorisation et une partie logique, le signal (4) d'entrée et le signal (5) de sortie de l'amplificateur (3) sont envoyés au processeur (6) du coupleur (7) de bus, et en ce que ce dernier alimente l'amplificateur (3).

6. Capteur de rayonnement suivant la revendication 4, caractérisé en ce que, dans un système d'installation électrique de bâtiments, dans lequel des postes d'abonné sont en liaison avec un bus par l'intermédiaire de coupleurs (7) de bus, comportant chacun un processeur (6) ayant un dispositif de mémorisation et une partie logique, le signal (5) de sortie de l'amplificateur (3) est envoyé au processeur (6) du coupleur (7) de bus associé, et en ce que ce dernier alimente l'amplificateur (3) ainsi qu'un générateur (11) de signaux servant à fournir un signal d'entrée défini.

7. Capteur de rayonnement suivant la revendication 5 ou 6, caractérisé en ce qu'on utilise comme capteur (1) un élément travaillant de manière analogique et ayant des propriétés linéaires, et en ce qu'il est monté des convertisseurs A/N et des amplificateurs analogiques en amont des entrées de processeur destinées au capteur.
